# EUROPÄISCHE PATENTSCHRIFT

(11) **EP 1 174 607 B1**
(45) Veröffentlichungstag und Bekanntmachung des Hinweises auf die Patenterteilung: **29.09.2004**
(21) Anmeldenummer: 01114101.7
(22) Anmeldetag: 09.06.2001
(51) Int. Cl.: F02D 11/10, F02D 9/02

(54) **Vorrichtung und Verfahren zur Steuerung des Unterdrucks in einer Brennkraftmaschine**
Device for and method of controlling a vacuum in a combustion engine
Dispositif et procédé pour commander la dépression dans un moteur à combustion

(30) Priorität: 21.07.2000 DE 10035511
(43) Veröffentlichungstag der Anmeldung: 23.01.2002
(73) Patentinhaber: Bayerische Motoren Werke Aktiengesellschaft, 80809 München (DE)
(72) Erfinder: Hasenclever, Hanns-Christian, Dr., 80809 München (DE); Ramatschi, Stephan, 85604 Zorneding (DE); Müller, Peter, 81673 München (DE); Detterbeck, Stefan, 80804 München (DE); Preuss, Florian, 80809 München (DE)

(56) Entgegenhaltungen:
- EP-A- 0 136 544
- DE-A- 3 202 796
- US-A- 4 221 193
- US-A- 4 257 363

## Beschreibung

Die Erfindung bezieht sich auf eine Vorrichtung zur Steuerung des Unterdrucks in einer Brennkraftmaschine nach dem Oberbegriff des Patentanspruchs 1.

Eine derartige Vorrichtung ist beispielsweise aus der DE 197 54 614 A1 bekannt, wonach der Unterdruck mittels eines Drosselventils in Abhängigkeit vom Druck des Bremskraftverstärkers gesteuert wird. Ein ähnliche Vorrichtung ist aus der EP 0 136 544 bekannt.

Weiterhin ist eine derartige Vorrichtung auch aus dem Artikel "Elektronikkonzept beim BMW-12-Zylinder-Motor", Automobil-Industrie Nr. 1/88, S. 23/24, bekannt, bei der über eine elektronische Motorleistungsregelung ein Drosselventil in Form einer vom Fahrpedal entkoppelten Drosselklappe abhängig von verschiedenen Fahrbetriebsanforderungen gesteuert werden kann. Beispielsweise kann ein stabiler Leerlaufbetrieb durch entsprechende Regelung des Drosselventils erreicht werden. Dieses bekannte System wird auch zur Fahrgeschwindigkeitsregelung (Tempomat) und für eine Anti-Schlupf-Regelung mit Momentenreduzierung verwendet. Derartige Fahrzeugsysteme sind auch unter dem Begriff E-Gas-Systeme bekannt. Sie können ein oder mehrere Steuergeräte umfassen. Bei derartigen Systemen wird die Stellung des Fahrpedals und die Stellung des Drosselventils üblicherweise mittels Sensoren, z. B. mittels Potentiometer, erfaßt. Ein Seilzug zwischen Fahrpedal und Drosselklappe wird grundsätzlich nicht mehr benötigt, ist jedoch häufig noch als mechanische Redundanz vorgehalten.

Weiterhin wird allgemein bei Brennkraftmaschinensteuerungen üblicherweise im sog. Schubbetrieb das Drosselventil zumindest nahezu geschlossen. Schubbetrieb liegt insbesondere dann vor, wenn bei eingelegtem Gang das Fahrpedal losgelassen wird. Genauer: Als Schubbetrieb wird auch der Zustand bezeichnet, in dem ein negatives Moment an der Abtriebswelle der Brennkraftmaschine anliegt, die Maschine also mit eingelegtem Gang im eingekuppelten Zustand geschleppt wird.

Es ist Aufgabe der Erfindung, unter Ausnutzung eines Systems, bei dem ein Drosselventil unabhängig von der Stellung des Fahrpedals gesteuert werden kann, den Kraftstoffverbrauch, insbesondere auch im Schubbetrieb, vorausschauend für verschiedene längere Fahrzyklen zur reduzieren.

Diese Aufgabe wird durch die kennzeichnenden Merkmale des Patentanspruchs 1 gelöst. Vorteilhafte Weiterbildungen der Erfindung sind die Gegenstände der abhängigen Ansprüche.

Erfindungsgemäß wird das Drosselventil grundsätzlich vollständig geöffnet, wenn während des Betriebs der Brennkraftmaschine aufgrund vorgegebener Betriebsbedingungen die Kraftstoffeinspritzung ausgeschaltet ist und wenn eine vorgegebene Bedingung zum zumindest teilweisen Schließen des Drosselventils nicht vorliegt. Das Drosselventil ist hier vorzugsweise eine Drosselklappe. Bei Brennkraftmaschinen ohne Drosselklappe, z. B. bei Systemen mit variablem Ventiltrieb (VVT) entspricht das Drosselventil den Ventilen am Brennraum, die ohnehin ebenfalls unabhängig vom Fahrpedal betätigt werden.

Der Erfindung liegt die Erkenntnis zugrunde, dass ein Schließen oder auch ein teilweises Schließen eines bzw. des Drosselventils, selbst wenn die Kraftstoffeinspritzung bereits abgeschaltet ist, zu einem Abbremsen des Fahrzeuges führt. Grund hierfür ist der Unterdruck, der sich bei geschlossenem Drosselventil aufbaut, hervorgerufen durch die Drosselung der Ansaugluft. Ein Abbremsen des Fahrzeuges ist jedoch bei Loslassen des Fahrpedals nicht in allen Fällen erwünscht. Beispielsweise bei einem Hochschaltvorgang mit einem Handschaltgetriebe ist eher eine Beschleunigung als eine Verzögerung erwünscht. Ebenso bei leichter Bergabfahrt oder im Kolonnenverkehr könnte ein Abbremsen des Fahrzeuges nach dem Loslassen des Fahrpedals dazu führen, daß unmittelbar darauf wieder ein Gasgeben erforderlich wird. Durch die Erfindung wird ein Unterdruck in der Weise, daß das Fahrzeug ungewollt abgebremst wird, verhindert. Phasen, in denen das Fahrzeug unnötig durch den Motor abgebremst wird, werden vermieden oder zumindest minimiert. Hierdurch kann der Kraftstoffverbrauch abgesenkt werden. Dies ist ein wesentlicher Vorteil der Erfindung.

Ein zumindest teilweises Schließen des Drosselventils wird nur in Ausnahmesituationen, die durch vorgegebene Betriebsbedingungen definiert werden, vorgenommen. Eine derartige Ausnahmesituation ist insbesondere ein Verzögerungswunsch des Fahrers. Ein Verzögerungswunsch wird durch das Steuergerät z. B. dadurch erkannt, daß das Fahrpedal besonders schnell losgelassen wird oder daß nach dem Loslassen des Fahrpedals die Bremse betätigt wird. Hierfür erhält das Steuergerät die notwendigen Eingangssignale, wie z. B. das Signal eines Fahrpedalgebers, das Signal des mit dem Bremspedal verbundenen Bremslichtschalters oder das Signal eines Drucksensors in der Bremshydraulikleitung.

Mittels eines Drucksensors in der Bremshydraulikleitung kann beispielsweise auch das Ausmaß des Verzögerungswunsches ermittelt werden. Bei hohem Bremsdruck ist ein Wunsch nach starker Verzögerung anzunehmen. Bei schnellem Loslassen des Fahrpedals und schnell daran anschließender Betätigung des Bremspedals ist ebenfalls ein Wunsch nach starker Verzögerung anzunehmen. In diesem Fall kann das Drosselventil vollständig geschlossen werden. Das Drosselventil kann umso mehr geschlossen werden, je höher das Ausmaß des Verzögerungswunsches ist.

In einer Vereinfachung der Erfindung kann aber auch nur zwischen einem Vorliegen oder Nicht-Vorliegen eines Verzögerungswunsches unterschieden werden. Bei Vorliegen eines Verzögerungswunsches kann das Drosselventil vorzugsweise immer vollständig geschlossen werden.

Grundvoraussetzung der Erfindung ist, daß die Brennkraftmaschine betrieben wird, aber die Kraftstoffeinspritzung abgeschaltet ist. Bedingungen zum Abschalten der Kraftstoffeinspritzung sind beispielsweise der Schubbetrieb, der erkannt wird, wenn ein Gang eingelegt ist aber das Fahrpedal losgelassen ist. Die Kraftstoffeinspritzung kann auch abhängig von der Katalysatortemperatur ein- und ausgeschaltet werden.

Ein weiterer Vorteil der Erfindung ist, daß bei geöffnetem Drosselventil die Abgassensoren im Schubbetrieb nachkalibriert werden können, da Abgasund Kraftstoffreste von der nachströmenden Luft schnell verdrängt werden.

## Patentansprüche

1. Vorrichtung zur Steuerung des Unterdrucks in einer Brennkraftmaschine mit einem Ansaugkanal zum Einführen eines Luftstromes in die Brennkammern der Brennkraftmaschine und mit einem im Ansaugkanal angeordnetem Drosselventil, das durch ein elektronisches Steuergerät unabhängig vom Fahrpedal steuerbar ist und durch das der Ansaugkanal geschlossen bzw. geöffnet werden kann, **dadurch gekennzeichnet, daß** das Steuergerät Mittel aufweist, durch die das Drosselventil grundsätzlich vollständig geöffnet wird, wenn während des Betriebs der Brennkraftmaschine aufgrund vorgegebener Betriebsbedingungen die Kraftstoffeinspritzung ausgeschaltet ist und wenn nicht eine vorgegebene Bedingung zum zumindest teilweisen Schließen des Drosselventils vorliegt.

2. Vorrichtung nach Patentanspruch 1, **dadurch gekennzeichnet, daß** die vorgegebene Bedingung zum zumindest teilweisen Schließen des Drosselventils ein Verzögerungswunsch des Fahrers ist, der durch das Steuergerät erkannt wird.

3. Vorrichtung nach Patentanspruch 2, **dadurch gekennzeichnet, daß** das Drosselventil geschlossen wird, wenn ein Verzögerungswunsch erkannt wird.

4. Vorrichtung nach Patentanspruch 2, **dadurch gekennzeichnet, daß** das Ausmaß des Verzögerungswunsches erfaßt wird und daß das Drosselventil umso mehr geschlossen wird, je höher das Ausmaß des Verzögerungswunsches ist.

5. Vorrichtung nach einem der Patentansprüche 1 bis 4, **dadurch gekennzeichnet, daß** die Abgassensoren bei geöffnetem Drosselventil und ausgeschalteter Kraftstoffeinspritzung nachkalibriert werden.

6. Verfahren zur Steuerung des Unterdrucks in einer Brennkraftmaschine mittels einer Vorrichtung nach einem der Patentansprüche 1 bis 5.

## Claims

1. A device for controlling the negative pressure in an internal combustion engine, comprising an induction port for introducing an air flow into the engine combustion chamber and a throttle valve disposed in the induction port and controllable by an electronic control unit independently of the accelerator and adapted to open or close the induction port, **characterised in that** the control unit comprises means whereby the throttle valve is in principle fully opened if, owing to set operating conditions, the fuel injection is switched off while the engine is running and if there is no preset requirement to at least partly close the throttle valve.

2. A device according to claim 1, **characterised in that** the preset requirement to at least partly close the throttle valve is a desire of the driver to decelerate, recognised by the control unit.

3. A device according to claim 2, **characterised in that** the throttle valve is closed if a wish to decelerate is recognised.

4. A device according to claim 2, **characterised in that** the urgency of the wish to decelerate is detected and the throttle valve is closed to an extent depending on the urgency.

5. A device according to any of claims 1 to 4, **characterised in that** the exhaust-gas sensors are recalibrated when the throttle valve is opened and the fuel injection is switched off.

6. A method of controlling the negative pressure in an internal combustion engine by means of a device according to any of claims 1 to 5.

## Revendications

1. Dispositif pour commander la dépression dans un moteur à combustion interne, comprenant un canal d'aspiration pour introduire un courant d'air dans les chambres de combustion du moteur à combustion interne, et une soupape d'étranglement disposée dans le canal d'aspiration et pouvant être commandée par un appareil de commande électronique indépendamment de la pédale d'accélération et permettant de fermer ou d'ouvrir le canal d'aspiration,
**caractérisé en ce que**
l'appareil de commande présente des moyens par lesquels la soupape d'étranglement est par principe complètement ouverte lorsque, pendant le fonctionnement du moteur à combustion interne, en raison de conditions de fonctionnement prédéterminées, l'injection de carburant est coupée et en l'absence d'une condition prédéterminée pour fermer du moins partiellement la soupape d'étranglement.

2. Dispositif selon la revendication 1,
**caractérisé en ce que**
la condition prédéterminée pour la fermeture du moins partielle de la soupape d'étranglement est une demande de temporisation du conducteur détectée par l'appareil de commande.

3. Dispositif selon la revendication 2,
**caractérisé en ce que**
la soupape d'étranglement est fermée lorsqu'une demande de temporisation est détectée.

4. Dispositif selon la revendication 2,
**caractérisé en ce que**
l'ampleur de la demande de temporisation est détectée et la soupape d'étranglement est d'autant plus fermée que l'ampleur de la demande de temporisation est grande.

5. Dispositif selon l'une quelconque des revendications 1 à 4,
**caractérisé en ce que**
les capteurs de gaz d'échappement peuvent être recalibrés lorsque la soupape d'étranglement est fermée et l'injection de carburant est coupée.

6. Procédé pour commander la dépression dans un moteur à combustion interne au moyen d'un dispositif selon l'une quelconque des revendications 1 à 5.
